(19) Europäisches Patentamt
European Patent Office
Office européen des brevets

(11) Publication number: **0 546 184 A1**

# (12) EUROPEAN PATENT APPLICATION published in accordance with Art. 158(3) EPC

(21) Application number: **92907993.7**

(22) Date of filing: **06.04.92**

(86) International application number: **PCT/JP92/00426**

(87) International publication number: **WO 92/17530 (15.10.92 92/26)**

(51) Int. Cl.[5]: **C08J 5/18**, B32B 27/18, B32B 27/36, B29C 55/02, //C08L67:02,B29K67:00

(30) Priority: **06.04.91 JP 100265/91**
**25.09.91 JP 271806/91**
**26.09.91 JP 273444/91**

(43) Date of publication of application: **16.06.93 Bulletin 93/24**

(84) Designated Contracting States: **AT BE CH DE DK ES FR GB GR IT LI LU NL SE**

(71) Applicant: **TORAY INDUSTRIES, INC.**
**2-1, Nihonbashi Muromachi 2-chome**
**Chuo-ku**
**Tokyo 103(JP)**

(72) Inventor: **KIMURA, Masahiro**
**Toray Nakatogariapart 4-3 734, Nakatogari**
**Nagaizumi-cho Sunto-gun Shizuoka 411(JP)**
Inventor: **SAEKI, Tomoji**
**B1-26, 10, Sonoyama 2-chome**
**Otsu-shi Shiga 520(JP)**
Inventor: **SUZUKI, Masaru**
**6-12, Takenouchi 2-chome**
**Ito-shi Shizuoka 414(JP)**
Inventor: **MINAMIZAWA, Hidehito**
**Otowaryo, 3-21-20, Kitaoji**
**Otsu-shi Shiga 520(JP)**
Inventor: **OKAZAKI, Iwao Lionsmansion**
**Jyurakunijyo 504**
**857, Jyuraku-cho, Nijyosagaru Senbondori**
**Kamigyo-ku Kyoto-shi Kyoto 602(JP)**
Inventor: **ABE, Koichi**
**Palace Rakuhoku 411 50-1, Takeya-cho,**
**Takano**
**Sakyo-ku Kyoto-shi Kyoto 606(JP)**
Inventor: **YOSHIDA, Minoru**
**Toray Asahigaokaapart 22 459-2,**
**Kawaharagaya**
**Mishima-shi Shizuoka 411(JP)**

(74) Representative: **Coleiro, Raymond et al**
**MEWBURN ELLIS 2 Cursitor Street**
**London EC4A 1BO (GB)**

## (54) POLYESTER FILM AND PRODUCTION METHOD THEREFOR.

(57) A polyester film made of organic polymer particles, which have a specified strength at the time of deformation, and of which the product of the specific surface area and diameter is specified. The particles in film form are deformed in a specific direction, and the film has a surface with minute projections. This polyester film has a desired surface form, particularly suitable for magnetic recording media, and has excellent balance of travellability, wear resistance and electromagnetic conversion characteristics.

EP 0 546 184 A1

## Technical Field of the Invention

The present invention relates to a polyester film and a process for producing the same, and more particularly, relates to a film excellent in slipping property, abrasion resistance and electromagnetic conversion property by containing organic polymeric particles having a specified specific surface area and given by a pliability and a process for producing the same.

## Background Art of the Invention

Generally, a thermoplastic polyester, for example, polyethylene terephthalate, has excellent mechanical properties and chemical properties, and is broadly used for a formed product of a film, a fiber, etc. When a thermoplastic polyester is processed to and used as a formed product, the slipping property and the abrasion resistance thereof greatly affect the working ability in the production process or in the processing processes for various uses. For example, when the polyester is used as a base film of a magnetic tape, if these properties are insufficient, the friction between a coating roll and the film in the production process for the magnetic tape becomes large, wrinkles and scratches are likely to occur in the film. Further, the powders abraded from the film are liable to occur, and missing of coating occurs in the process where a magnetic layer is coated, and as a result, missing of magnetic record (drop out) is likely to occur. Furthermore, the size and the form of the protrusions on the surface of the base film are important factors for the electromagnetic conversion property which represents a property of a magnetic tape, and the existence of particles having a too large size remarkably decreases the property.

As a conventional method for improving the slipping property of the film, a method for containing inorganic particles such as titanium dioxide, calcium carbonate or silicon dioxide particles in the polyester is proposed in many disclosures. However, since these inorganic particles are hard and poor in the affinity with polyester, for example, when the polyester is used as a film and an external force caused by a calendering in a magnetic layer coating process, a contact with a roll during running of the film or a contact between the surfaces of the film in winding is applied to the film, the particles easily fall off from the film and this causes occurrence of chipped substances, deterioration of the slipping ability and occurrence of wrinkles on the film surface. Moreover, because the fallen particles themselves are hard, the chipped substances and the wrinkles on the film surface increase multiplicatively as time passes. Thus, when the amount of the chipped substances increases and the wrinkles occur on the film surface, missing of coating in a magnetic layer coating process and drop out are liable to occur. Further, a dirt of a calender roll in the process for coating a magnetic layer remarkably deteriorates the working ability in the production of a magnetic recording film. Namely, hard particles such as inorganic particles are likely to directly receive an external force, and this is a problem to be solved for improving the abrasion resistance.

As a method for improving the affinity of particles with polyester, a method for treating the surfaces of inorganic particles or a method for using organic particles are proposed.

As the surface treatment of inorganic particles, for example, the surface treatment by polyacrylic acid polymers is proposed in JP-A-SHO 63-128031, the surface treatment by a phosphorus compound is proposed in JP-A-SHO 62-235353 and 63-234039, the surface treatment by a coupling agent is proposed in JP-A-SHO 62-223239 and 63-312345, the surface treatment by a silane compound is proposed in JP-A-SHO 63-304038, and the surface treatment by the graft due to glycol is proposed in JP-A-SHO 63-280763, respectively. However, a sufficient abrasion resistance cannot be obtained by these methods. As the organic particles, crosslinked polymeric particles having a functional group capable of reacting with polyester are proposed in, for example, JP-B-SHO 63-45409, crosslinked polymeric particles having a sharp particle diameter distribution are proposed in JP-A-SHO 59-217755, and spherical crosslinked polymeric particles are proposed in JP-A-HEI 2-189359, respectively. However, these methods do not specify the strength and the specific surface area of the particles, and the improvement of the abrasion resistance and the electromagnetic conversion property is not sufficient merely by using these methods.

An object of the present invention is to solve the disadvantages above-mentioned, and to obtain a film excellent in all of slipping property, abrasion resistance and electromagnetic conversion property.

## Disclosure of the Invention

The object of the present invention is accomplished by the following constitution.

A polyester film according to the present invention is a polyester film characterized in that the polyester film contains organic polymeric particles whose strength when deformed by 10% ($S_{10}$) is more than 0 $kgf/mm^2$ and not more than 10 $kgf/mm^2$ and whose product of specific surface area S ($m^2/g$) and weight

average diameter Dw (μm) is not less than 5 and not more than 60, the ratio of the diameter in the longitudinal direction of the film to the diameter in the thickness direction of the film of each of the particles contained in the film is not less than 1.1, and the parameter of the surface roughness of the film Rt/Ra is not more than 40.

The film can be produced by a process for producing a polyester film comprising the steps of adding organic polymeric particles whose strength when deformed by 10% ($S_{10}$) is more than 0 kgf/mm$^2$ and not more than 10 kgf/mm$^2$ to a polyester in a condition of a water slurry and/or an organic compound slurry having a boiling point of not higher than 200°C , and forming the polyester in a form of a film by melt extruding the polyester and thereafter stretching the polyester so that the product of the specific surface area S (m$^2$/g) and the weight average diameter Dw (μm) of the particles contained in the film is not less than 5 and not more than 60 and the ratio of the diameter in the longitudinal direction of the film to the diameter in the thickness direction of the film of each of the particles contained in the film is not less than 1.1.

## Brief Explanation of the Drawings

FIG. 1 is a schematic sectional view showing a method for measuring the strength of particles ($S_{10}$) according to the present invention.

FIG. 2 is a graph showing the relationship between load and the deformation of particle using the apparatus shown in FIG. 1.

FIG. 3 is a schematic view of an apparatus for measuring the melting specific resistance of the polyester composition used in the present invention.

1. lower press indenter
2. upper press indenter
3. fine particle
4. break point
5. DC high voltage generator
6. ammeter
7. voltmeter
8. heater
9. polyester
10. electrode
    a. when there are a soft portion and a hard portion
    b. when there is only a soft portion
    c. when broken

## The Best mode for carrying out the Invention

The organic polymeric particles whose strength when deformed by 10% (hereinafter, referred to as $S_{10}$) according to the present invention is more than 0 kgf/mm$^2$ and not more than 10 kgf/mm$^2$. The upper limit of the $S_{10}$ is desired to be 8 kgf/mm$^2$ and preferably 6 kgf/mm$^2$ in order to particularly improve the abrasion resistance and the slipping stability of a formed product. Particularly, organic polymeric particles having a $S_{10}$ of less than 4 kgf/mm$^2$ and a good affinity with polyester are preferred because the flatness is greatly improved.

Where, the $S_{10}$ of particles is an index for representing the softness of the particles, and can be determined by, for example, measuring the deformation of the particle caused by an external force in a manner such as one shown in FIG. 1. In the method shown in FIG. 1, the particles are dispersed on a lower press indenter 1, and one fine particle 3 is fixed between an upper press indenter 2 and the lower press indenter 1. Then, a load is applied at a constant increasing rate, the deformation of the fine particle and the load are automatically measured, the $S_{10}$ is calculated from the load P (kgf) when the particle is deformed by 10% by the following equation. (This measurement is repeated ten times, and the average value is defined as the $S_{10}$.)

$$S_{10} = 2.8 \times 10^6 \ P / \pi d^2 \ (\mathrm{kgf/mm^2}) \qquad (1)$$

Where, "d" represents particle diameter (μm).

The $S_{10}$ of particle can be determined from the polyester film, and, for example, the $S_{10}$ can be measured by dissolving the polyester by o-chlorophenol or alkali and separating only the particles from the

polyester and drying them and measuring in a manner similar to that described above.

Further, in the present invention, in a case where it is difficult to measure the $S_{10}$ of particle because the diameter of the particle is too small, a particle having the same composition as that of the particle to be determined and having a diameter of about 1 to 3 $\mu$m is made and the $S_{10}$ of the particle made is measured, and the measured value is defined as the $S_{10}$ of the particle having the small diameter.

In the present invention, it is preferred that the strength $S_{10}$ of the organic polymeric particles satisfies the above range as well as the particles have soft portions and hard portions, because the slipping property is further improved.

As the method for recognizing the construction, for example, there is a method for determining the behavior of the compression of the particle. In the method shown in FIG. 1, the particles are dispersed on a lower press indenter 1, and one fine particle 3 is fixed between an upper press indenter 2 and the lower press indenter 1. Then, a load is applied at a constant increasing rate, the deformation of the fine particle and the load are automatically measured. At that time, if the particle has a soft portion and a hard portion, a break point such as a point 4 occurs in the curve plotting the force and the deformation as shown in FIG. 2. Although such a phenomenon occurs also in the time when the particle is broken, because at that time the curve is represented as shown by the dashed line in the figure, the above-mentioned phenomenon can be distinguished from the breakage. In the figure, the broken line represents a curve wherein the particle has only soft portion. The break point may occurs not only one time but also a plurality of times during the measurement.

In the organic polymeric particles according to the present invention, the product of the specific surface area S ($m^2$/g) and the weight average diameter Dw ($\mu$m) is in the range of 5 to 60. The product is preferred to be in the range of 5 to 30, more preferably in the range of 5 to 18, because the uniformity of the particles is good and the size and the form of the protrusions formed on the film surface become uniform. Where, the specific surface area S ($m^2$/g) is measured by nitrogen gas absorption method (hereinafter, referred to as BET method). The weight average diameter Dw ($\mu$m) is determined by taking photographs of the particles in the polymer or the film observed by an electron microscope at a magnification of 20,000 to 50,000 (size of the photograph: 8 cm x 10 cm, number of the photographs: 30) and determining the equivalent sphere diameter of the organic polymeric particles. Where, the equivalent sphere diameter means a diameter of a sphere having the same volume as that of the particle.

The weight average diameter of the organic polymeric particles is preferably in the range of 0.005 to 3 $\mu$m, more preferably in the range of 0.005 to 2 $\mu$m, and further more preferably in the range of 0.010 to 1 $\mu$m, from the viewpoints of the slipping property of the formed product and the proper height of the protrusions formed on the surface.

Further, the organic polymeric particles according to the present invention is characterized in that the ratio of the diameter in the longitudinal direction of the film to the diameter in the thickness direction of the film of each of the particles contained in the film is not less than 1.1, when the particle contained in the film is observed in cross section. In the present invention, photographs of the particles observed in the section extending in the longitudinal direction of the film by an electron microscope at a magnification of 20,000 to 50,000 are taken (size of the photograph: 8 cm x 10 cm, number of the photographs: 30), the ratio is determined from the diameter of the organic polymeric particle in the longitudinal direction and the diameter thereof in the thickness direction, and the weight average value relative to the total organic polymeric particles is defined as the particle diameter ratio. The particle diameter ratio is preferably not less than 1.1 and not more than 5.0, more preferably not less than 1.2 and not more than 4.0. Although the particle diameter ratio may be formed before the formation of the film, it is preferred that the particle diameter ratio is formed or becomes larger by the stretching because the affinity of the particles becomes better.

In the present invention, the parameter of the surface roughness of the film Rt/Ra is not more than 40. If the Rt/Ra is more than 40, the abrasion resistance and the electromagnetic conversion property deteriorate. The Rt/Ra is preferably not more than 30, more preferably not more than 25, and particularly preferably not more than 20.

The kind of the organic polymeric particles according to the present invention is not particularly restricted as long as the above-mentioned properties are satisfied. For example, vinyl particles such as polystyrene or crosslinked polystyrene particles, styrene-acrylic or acrylic crosslinked particles, or styrene-methacrylic or methacrylic crosslinked particles, or benzoguanamine, hormaldehyde, silicone, polytetrafluoroethylene, polyphenylester or phenolic resin particles can be employed. However, any particles can be employed as long as the particles are organic polymeric particles at least a part of which is insoluble to polyester.

As a preferable composition in the present invention, generally a copolymer of a monovinyl compound (A) having only one aliphatic unsaturated bond in the molecule and a compound (B) having two or more

aliphatic unsaturated bonds in the molecule which is used as a cross linking agent can be employed.

As examples of the compound (A) in the above copolymer, an aromatic monovinyl compound such as styrene, α-methylstyrene, fluorostyrene, ethylvinylbenzene or vinyl pyridine, a vinyl cyanide compound such as acrylonitrile or methacrylonitrile, an acrylate monomer such as methylacrylate, ethylacrylate, propylacrylate, butylacrylate, octylacrylate, dodecylacrylate, hexadecylacrylate, 2-ethylhexylacrylate, 2-hydroxyethylacrylate, glycydilacrylate or N,N'-dimethylaminoethylacrylate, a methacrylate monomer such as methylmethacrylate, ethylmethacrylate, propylmethacrylate, isopropylmethacrylate, butylmethacrylate, sec-butylmethacrylate, arylmethacrylate, phenylmethacrylate, benzilmethacrylate, 2-ethylhexylmethacrylate, 2-hydroxyethylmethacrylate, glycydilmethacrylate or N,N'-dimethylaminoethylmethacrylate, a mono- or dicarboxylic acid and an acid anhydride of dicarboxylic acid such as acrylic acid, methacrylic acid, maleic acid or itaconic acid, or an amide monomer such as acrylic amide or methacrylic amide can be employed.

As the above compound (A), a compound having the following chemical formula (C1) is preferred, and $R_2$ group having a carbon number of not less than 4 is preferred for giving a pliable segment. Particularly preferably, it is preferred that, when the compound (A) is structured as a polymer by a single kind of component, the glass transition temperature thereof is not higher than the glass transition temperature of the polyester used in the present invention, further preferred that the glass transition temperature is not higher than 50 °C , preferably not higher than 20 °C , and further preferably not higher than 0 °C. Concretely, acrylate monomer such as butylacrylate, octylacrylate, dodecylacrylate, hexadecylacrylate or 2-ethylhexylacrylate or methacrylate monomer such as butylmethacrylate, sec-butylmethacrylate, hexylmethacrylate, hexadecylmethacrylate or 2-ethylhexylmethacrylate can be preferably used.

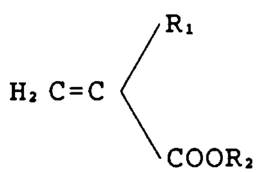

(C1)

$R_1$ : H or $CH_3$

$R_2$ : H or alkyl group having a carbon number of not less than 1

On the other hand, in order to form a hard portion, it is preferred that a compound whose glass transition temperature when the compound is structured as a polymer by a single kind of component is higher than the glass transition temperature of the compound (A) used for giving softness is used, and the difference between the temperatures is preferably not less than 20 °C , more preferably not less than 40 °C . As monomers forming such a polymer, styrene, methylacrylate and methylmethacrylate are preferred.

With respect to the compound (A) described above, two or more kinds of compounds may be employed. Particularly it is preferred that an acrylate having a alkyl group with a carbon number of not less than 4 and/or a methacrylate having a alkyl group with a carbon number of not less than 4 are employed at a content of not less than 10 wt% for giving a soft particle composition.

As examples of the compound (B), divinylbenzene, or trimethylolpropanetriacrylate or trimethylolpropanetrimethacrylate, or polyatomic acrylate or methacrylate such as ethylene glycol diacrylate, ethylene glycol dimethacrylate, polyethylene glycol diacrylate, polyethylene glycol dimethacrylate, 1,3-butylene glycol diacrylate, 1,3-butylene glycol dimethacrylate, trimethylolpropanetriacrylate or trimethylolpropanetrimethacrylate can be employed. Among these compounds (B), particularly divinylbenzene, ethylene glycol dimethacrylate or trimethylolpropanetrimethacrylate is preferably used. Two or more kinds of compounds (B) may be employed for forming particles.

The organic polymeric particles according to the present invention are controlled in strength by the above components. Namely, softness and hardness can be given by controlling the kind of compound (A) or the amount of compound (B). The rate of the pure component of the cross linking agent in the particles is preferably in the range of 2 to 50 wt%, more preferably in the range of 2 to 40 wt%, and particularly preferably in the range of 2 to 30 wt% to produce crosslinked organic particles having a relatively low strength.

Further, compounds other than compounds (A) and (B) may be added, the particles may be coated with a fine amount of an inorganic material in order to control the particle diameter ratio or to increase the thermal resistance or the dispersion property, and a surface treatment may be performed to improve the affinity.

As examples of the preferable composition for the organic polymeric particles according to the present invention, styrene-butylacrylate-divinylbenzene copolymer, butylacrylate-divinylbenzene copolymer, styrene-ethylvinylbenzene-divinylbenzene copolymer, styrene-ethylvinylbenzene-butylacrylate-divinylbenzene copolymer, ethylvinylbenzene-butylacrylate-divinylbenzene copolymer, styrene-butylacrylate-ethylene glycol dimethacrylate copolymer, butylacrylate-ethylene glycol dimethacrylate copolymer, styrene-2-ethylhexylacrylate-divinylbenzene copolymer, styrene-ethylvinylbenzene-2-ethylhexylacrylate-divinylbenzene copolymer, 2-ethylhexylacrylate-ethylene glycol dimethacrylate copolymer, styrene-2-ethylhexylacrylate-ethylene glycol dimethacrylate copolymer, octylacrylate-divinylbenzene copolymer, styrene-octylacrylate-divinylbenzene copolymer, ethylvinylbenzene-octylacrylate-divinylbenzene copolymer, styrene-ethylvinylbenzene-octylacrylate-divinylbenzene copolymer, styrene-butylmethacrylate-divinylbenzene copolymer, butylmethacrylate-divinylbenzene copolymer, styrene-butylmethacrylate-divinylbenzene copolymer, ethylvinylbenzene-butylmethacrylate-divinylbenzene copolymer and styrene-ethylvinylbenzene-butylmethacrylate-divinylbenzene copolymer can be employed.

The organic polymeric particles according to the present invention may have a uniform or non-uniform structure or a hollow structure. In the case of non-uniform structure, for example, the particles may have two or more kinds of structures, and the kinds and amounts of non-crosslinked components and crosslinked components of the composition of the particle may be different from each other between in the central portion and the outer portion of the particle. Further, portions having a composition other than that of the particle itself may be dispersed in the particle.

In a case where the running ability of the film is attached importance, particles having a non-uniform structure are preferable. For example, the particles, on which light and shade of colors are present when the sections of the particles are observed by an electron microscope after the particles are colored by, for example, $RuO_4$, are preferred.

The process for producing the organic polymeric particles according to the present invention will be explained referring to processes for producing crosslinked polymeric fine particles as examples. For example, there are processes for producing the particles by the following emulsion polymerizations after mixing compounds (A) and (B).

(a) soap free polymerization process: i.e., process for polymerizing without an emulsifier or using a very small amount of an emulsifier

(b) seed polymerization process for adding polymer particles in a polymerization system prior to emulsion polymerization and thereafter emulsion polymerizing

(c) core shell polymerization process for emulsion polymerizing a part of a monomer component and polymerizing the residual monomer in the polymerization system

(d) polymerization process by the "ugel stat" disclosed in JP-A-SHO 54-97852 and JP-A-SHO 54-126288

(e) polymerization process without using an expanding agent in the process (d)

In the processes, the same or different compounds (A) and (B) may be further added during the process of the polymerization. For example, a method for changing the concentration of the compound (A) or (B) in the system in order to give a different structure to particles after forming particles having a uniform structure can be employed.

The organic polymeric particles are preferably surface treated with a substance which has a low reactivity with polyester or which is non-reactive such as Na-methacrylate or Na-acrylate to stand both affinity with polyester and dispersion property. Although the surface treatment is not particularly restricted, a method for firstly producing organic polymeric particles as the matrix and thereafter adding a surface treatment agent and adsorbing the agent on the surface or reacting the agent with the surface is preferred from the viewpoint of the thermal resistance of the particles. For example, in the case of using Na-acrylate , styrene-ethylvinylbenzene-butylacrylate-divinylbenzene copolymer particles are produced as the matrix particles, and thereafter, styrene and acrylic acid are added and a part thereof is polymerized, and then, -COONa group originating from Na-methacrylate can be introduced into the surfaces of the particles by turning the system to alkali side. As the amount of the surface treatment agent, the range of 0.01-500 parts by weight, preferably 0.1-300 parts by weight, is desired relative to the matrix particles of 100 parts by weight.

The thermal resistance of the organic polymeric particles is preferably not lower than 350 °C at the determination of the thermal decomposition temperature measured by a thermobalance (10% loss temperature), more preferably not lower than 360 °C, and particularly preferably not lower than 380 °C . In such a condition, it does not occur that the particles aggregate when the polyester composition is produced or molten and formed or when a formed product is recycled and thereby the uniformity of the film surface and the abrasion resistance thereof deteriorate, and therefore such a condition is preferable.

The content of the organic polymeric particles in polyester according to the present invention is preferably in the range of 0.001 to 20.0 parts by weight relative to polyester of 100 parts by weight, more preferably in the range of 0.005 to 10.0 parts by weight, and further more preferably in the range of 0.01 to 8.0 parts by weight.

In the organic polymeric particles according to the present invention, the ratio of the weight average diameter (Dw) to the number average diameter (Dn) is preferably not less than 1.1 to improve the keeping quality of the particle slurry and the abrasion resistance of the film. When the organic polymeric particles are observed by an electron microscope, it is not preferred that the particle diameters are not dispersed irregularly, but it is preferred, for example, that the particles having a large diameter and the particles having a small diameter are uniformly distributed, respectively. In such a state, for example, when a particle slurry or particles taken out from a solution by dissolving polyester are diluted by pure water and the distribution of the particle diameter by number standard is determined using an apparatus utilizing dynamic light scattering method, it can be recognized that there are a group of particles having a range of particle diameter and another group of particles having another range of particle diameter. In the measurement by dynamic light scattering method or observation by an electron microscope, the distribution of the particle diameter by number standard preferably has at least one maximal value in the range (a) of not less than 0.001 μm to not more than 0.2 μm and in the range (b) of more than 0.2 μm to not more than 5 μm, respectively. The ratio of the number represented by the maximum of the maximal values of the range (a) to the number represented by the maximum of the maximal values of the range (b) is preferably in the range of 1/1000 to 1000, more preferably in the range of 1/100 to 100. If two or more maximal values exist in the range (b), the electromagnetic conversion property and film roll formation are improved. To obtain such a particle diameter distribution, organic polymeric particles having a particle diameter range with a sharp distribution and other organic polymeric particles having another diameter range with a sharp distribution may be both employed.

Further, in the present invention, particles whose ratio of the diameter in the longitudinal direction of the film to the diameter in the thickness direction of the film of each of the particles contained in the film is less than 1.1 may be further contained other than the above organic polymeric particles at a content at which the properties of the film are not injured.

In the present invention, if at least one kind of inorganic particles are further contained, the running ability is further improved. The diameter of the inorganic particles is preferably in the range of 0.001 to 5 μm, more preferably in the range of 0.002 to 3 μm.

As concrete examples of the inorganic particles, inorganic oxide particles such as titanium oxide, silicon oxide, zirconium oxide and aluminium oxide particles, inorganic carbonate particles such as calcium carbonate and barium carbonate particles, inorganic phosphate particles such as calcium phosphate and sodium phosphate, inorganic sulfate such as barium sulfate and calcium sulfate, inorganic composite oxide such as kaolin and talc, fluoride represented by fluorite, and other generally used inorganic particles such as potassium titanate and aluminium hydroxide can be employed. Among these inorganic particles, titanium oxide, silicon oxide, calcium carbonate, zirconium oxide and aluminium oxide particles are particularly preferred. Further, these compounds may be substituted by not more than 50% of the total weight by a compound containing other elements.

In the present invention, it is preferred that non-incorporated particles which constituent is of at least one of aromatic dicarboxylate, alkali metal and alkaline earth metal and phosphorus are employed together to improve the running ability and the abrasion resistance. Further, it is possible to control the balance of the running ability and the abrasion resistance in this system by adding the above-mentioned inorganic particles.

As to the method or the timing for adding the organic polymeric particles or the inorganic particles to polyester, a known method, for example, a method for adding the particles to reaction system of polyester in a formation of powder or glycol slurry or a method for kneading the particles into polyester in a formation of powder or a slurry using a low boiling point solvent can be employed. In the case of inorganic particles, a method for adding the particles to reaction system of polyester in a formation of glycol slurry used in the reaction system is preferred, and in the case of organic polymeric particles, a method for kneading the particles into polyester in a formation of a slurry of water or organic compound having a boiling point of not higher than 200°C is preferred. In the addition of the particles, it is further preferred to use a vent-type forming apparatus for deaeration. The case of organic polymeric particles, for example, crosslinked polymeric particles, will be explained in detail.

A method for adding a slurry of crosslinked polymeric particles with water or organic compound having a boiling point of not higher than 200 °C to polyester in a vent-type forming apparatus, removing the water or the organic compound with a boiling point of not higher than 200°C under a heating and pressure

reducing condition, and melt kneading is preferred because the dispersion property is more improved. The vent-type forming apparatus is a forming apparatus having at least one vent hole, and for example, it may be an extruding forming apparatus or an injection molding apparatus. At least one of vent holes for removing the water or the organic compound with a boiling point of not higher than 200 °C must be maintained at a pressure reducing condition. The degree of the pressure reducing condition of the vent hole is preferably maintained at a pressure of not more than 100 Torr, more preferably not more than 50 Torr, further more preferably not more than 30 Torr.

On the other hand, the crosslinked polymeric particles must be added to polyester in a formation of a slurry of water or organic compound having a boiling point of not higher than 200 °C . As examples of the organic compound having a boiling point of not higher than 200 °C , an alcohol such as methanol, ethanol or ethylene glycol, a hydrocarbon compound such as benzene or toluene, an ester, a ketone or an amine can be employed, but it is not particularly restricted. As the solvent, water is preferred from the viewpoint of handling ability and removability. Of course, water and/or organic compound is in a formation of a mixture solvent of two or more kinds thereof, and in such a case, water-rich mixture solvent is preferred.

In the slurry of crosslinked polymeric particles, an anionic interfacial active agent such as sodium dodecylbenzene sulfonate or sodium lauryl sulfate, a nonionic interfacial active agent such as polyoxyethylenenonilphenylether or polyethylene glycol monostearate, or a protective agent such as polyvinyl alcohol or carboxylmethylcellulose is preferably contained from the viewpoint of particle dispersion property.

Further, although the concentration of the slurry of crosslinked polymeric particles with water and/or organic compound having a boiling point of not higher than 200 °C is not particularly restricted, the content of the water and/or the organic compound having a boiling point of not higher than 200 °C relative to the polymer is preferably in the range of not less than 2 wt% and not more than 30 wt%, and more preferably in the range of not less than 2 wt% and not more than 20 wt%. Such a condition is preferred because the dispersion property of the particles in the polymer is good and the intrinsic viscosity of the polymer does not decrease.

As the process for producing the composition containing the aforementioned inorganic particles or non-incorporated particles and organic polymeric particles, either a process for adding both particles to polyester reaction system or a process for reblending the master chips separately prepared and melt kneading them may be employed.

The polyester used in the present invention is produced by condensation polymerizing a bifunctional component such as aromatic dicarboxylic acid or alkylester thereof and a glycol component. Particularly preferable materials are polyethylene terephthalate and polyethylene naphthalate, but other copolymerizing components may be contained as long as these polyesters are main constituents.

As examples of the copolymerizing components, dicarboxylic acid component such as adipic acid, sebacic acid, phthalic acid, terephthalic acid, naphthalene-2,6-dicarboxylic acid or 5-sodium sulfoisophthalic acid, polyatomic carboxylic acid component such as trimelitic acid or pyromelitic acid, oxycarboxylic acid component such as p-oxyethoxy benzoate, and diol component such as tetramethylene glycol, hexamethylene glycol, diethylene glycol, propylene glycol, neopentyl glycol, polyoxyalkylene glycol, p-xylene glycol, 1,4-cycrohexanedimethanol or 5- sodium sulforesolcinol can be employed.

In the thermoplastic polyester composition used in the present invention, the resistivity of the polyester in melting condition is preferably in the range of $5 \times 10^6$ to $5 \times 10^9$ Ω • cm because the property for electrostatic charge casting is improved. Where, the resistivity of the polyester in melting condition is determined as follows.

The resistivity is measured using a melt resistivity measuring apparatus shown in FIG. 3. Polyester 9 to be measured is placed in a container into which a pair of electrodes 10. The container is dipped in a heating body 8. The polyester 9 is molten and stored in a $N_2$ gas atmosphere at a temperature of 280 °C , and a voltage is applied from a D.C. high voltage generation apparatus 5. The resistivity is determined from the indicated values of an ammeter 6 and a voltmeter 7, the area of the electrode and the distance between the electrodes by the following equation (2).

$$P = \frac{V \times S'}{I \times D} \qquad (2)$$

P: melt resistivity (Ω • cm)
V: applied voltage (V)
S': area of electrode ($cm^2$)
I: measured current (A)
D: distance between electrodes (cm)

The resistivity of the polyester in melting condition depends upon the kind, existence and amount of the metal compound added in the production of polyester. Generally, the greater is the amount of the metal in the molten polyester which is not deactivated by a phosphorus compound, or the smaller is the amount of the metal compound which has precipitated in the polyester as particles, the melt resistivity tends to become lower.

Next, the relationship between the melt resistivity and the metal will be explained with reference to the case of polyethylene terephthalate (PET) obtained by transesterification.

In transesterification, usually, alkali metal compound, alkaline earth metal compound, zinc compound or manganese compound is used as the reaction catalyst, and a phosphorus compound is added in the stage at which the reaction substantially has finished. Where, the metal compound used as the reaction catalyst is partially deactivated by the phosphorus compound. The reaction product thus obtained is condensation polymerized under a condition of existence of antimony compound, titanium compound or germanium compound which is a catalyst for condensation polymerization to obtain PET. Usually, PET is produced by such a process, and the alkali metal compound, alkaline earth metal compound, zinc compound, manganese compound and phosphorus compound mainly affect the melt resistivity. These metal compounds or phosphorus compound tends to cause the generation of the particles which are insoluble to polyester.

As the metal compounds controlling the melt resistivity of polyester in the present invention, an aliphatic carboxylate of alkaline earth metal compound, zinc, manganese or alkali metal compound which is added in the stage of production of polyester, or a metal compound which is soluble in glycol such as halogenide or alcoholate such as methylate, ethylate or ethylene glycolate can be employed. Concretely, manganese acetate, magnesium acetate, calcium acetate, zinc acetate, lithium acetate, potassium acetate, sodium acetate, magnesium propionate, manganese propionate, potassium propionate, calcium propionate, zinc propionate, magnesium chloride, lithium chloride, manganese bromide, magnesium hydroxide, manganese hydroxide, calcium hydroxide, zinc hydroxide, lithium hydroxide, magnesium glycolate, calcium glycolate, lithium methylate or butylpotassium can be employed. Two or more kinds of these compounds may be together employed. Particularly, manganese compound and alkali metal compound are preferable for suppressing the precipitation of the particles.

In the transesterification, these metal compounds can be added by the amount of the catalyst before the transesterification and can be added again after the transesterification. In the transesterification, it is preferred that the compounds are added after the rate of the reaction of the esterification reaches to preferably not less than 90%, more preferably not less than 95%.

As the phosphorus compound, at least one selected from phosphate, phosphite and ester thereof can be employed. Concretely, phosphate, monomethylphosphate, dimethylphosphate, trimethylphosphate, tributylphosphate, phosphite, trimethylphosphite or tributylphosphite can be employed.

The polyester composition is usually extruded in a form of a sheet, cooled on a casting drum, and after an amorphous sheet is made, the sheet is stretched and heat set to produce a biaxially stretched film. If the resistivity of the polyester in a melting condition is in the range of $5 \times 10^6$ to $5 \times 10^9$ Ω • cm, the contact property between the sheet and the casting drum can be improved by providing an electrode between a die for extrusion and the casting drum for cooling and applying a high voltage to the sheet, thereby increasing the productivity. A plurality of kinds of polymers may be blended in a range which does not injure the object of the present invention, and an organic additive such as oxidation inhibitor, thermal stabilizer, lubricant or ultraviolet absorbent may be added by the volume generally employed.

The film according to the present invention can be applied to both a single layer film and laminated film. Namely, at least one layer of film with the aforementioned composition may be included from the viewpoint of running ability and electromagnetic conversion property.

Where, the laminated film means a film having at least two layers in the thickness direction, and a film having three or more layers is included in the film. In a case where running ability is required, at least one outermost layer is preferably constructed from the polyester film according to the present invention. A laminated film whose both surfaces are of the polyester film according to the present invention is particularly preferred.

As the formation of the laminated film, various formations are available. For example, in the case of two layer laminated film, a simple two layer lamination structure of the layer (layer A) containing organic polymeric particles according to the present invention and another layer (layer B), a lamination structure

wherein a coating layer (for example, a good adhesive layer) is provided on the layer A, a lamination structure wherein a coating layer (for example, a good adhesive layer) is provided on the layer B or a lamination structure wherein a back coat layer is provided on the layer B may be employed. In the case of three layer laminated film, a simple three layer lamination structure of layer A/layer B/layer A, a lamination structure wherein a coating layer is provided on the surface of one of the layers A or a lamination structure wherein coating layers are provided on the surfaces of both the layers A (on both surfaces of the laminated film) etc. can be employed. In this case, the thickness of the layer A is preferably on the range of 0.1 to 1.5 $\mu$m, and the thickness of the coating layer is preferably about 0.1 $\mu$m. In the case of four or more layer laminated film, since basically the number of the layer B (intermediate layer) in the above three layer laminated film merely increases, the relationship of position between the layer A and the coating layer is the same as that of the three layer laminated film.

The above coating layer means a layer which is coated on one or both surfaces of a single layer or laminated film in the film formation process or after the process.

The coating layer can be provided by using a known material, for example, 1) a high solid type, 2) nonaqueous dispersion, 3) emulsion type, 4) solventless type, 5) water soluble or water dispersion type, or 6) organic solvent type.

Concretely, polyester resins, acrylic resins or urethane resins can be employed (for example, JP-A-SHO 54-43017, JP-B-SHO 49-10243, JP-A-SHO 52-19786, JP-A-SHO 52-19787, JP-B-SHO 47-40873, JP-A-SHO 50-83497, JP-A-SHO 50-121336, JP-A-SHO 52-155640, JP-A-HEI 1-30622, JP-A-SHO 57-70153, JP-A-SHO 57-6767 and JP-A-SHO 59-111849). However, the coating material is not restricted by these resins, and the coating layer may be formed by freely combining these resins.

In such a structure of the laminated film, when the thickness of the laminated film is referred to as "t" ($\mu$m), the thickness and the weight average diameter Dw ($\mu$m) of the organic polymeric particles according to the present invention preferably satisfy the following relationship.

$$0.1 \leqq t/Dw \leqq 100$$

A process for producing such a laminated film will be concretely explained.

First, after polyester pellets are blended at a predetermined rate and dried, the pellets are supplied to extruders for melting the pellets and laminating the molten polymers, the polymers are delivered out from a die with a slit in a form of a sheet, and the sheet is cooled and solidified on a casting roll to make a non-stretched film. Namely, the polymers are laminated using two or more extruders and a manifold or a feed block for two or more layers (for example, a feed block having a rectangular laminating portion), a sheet having two or more layers is delivered out from a die, and the sheet is cooled to make a non-stretched film. In this process, it is effective to provide a static mixer and a gear pump in the polymer path. Further, it is effective to control the melting temperature of the extruder for extruding the polymer of the outermost layer to a temperature lower than that for the base layer by 5-10 °C .

Next, the non-stretched film is biaxially stretched and biaxially oriented. As the stretching process, a sequential biaxially stretching process and a simultaneous biaxially stretching process can be used. However, a sequential biaxially stretching process for firstly stretching in the longitudinal direction, thereafter stretching in the transverse direction, dividing the longitudinal stretching into three or more stages, and controlling the total longitudinal draw ratio within the range of 3.5 to 6.5 times, is particularly preferred. Although the temperature for the longitudinal stretching varies depending the kind of polyester and therefore cannot be decided to a specified temperature, usually it is effective to control the temperature of the first stage in the range of 50 to 130 °C and the temperature of the succeeding stages at a temperature higher than the temperature of the first stage. The stretching speed in the longitudinal direction is preferably in the range of 5000 to 50000 %/min. Generally, a process for using a stenter is employed for the transverse stretching. The draw ratio is preferably in the range of 3.0 to 5.0 times. The stretching speed in the transverse direction is preferably in the range of 1000 to 20000 %/min, and the temperature thereof is preferably in the range of 80 to 160 °C . Next, the stretched film is heat treated. The temperature of the heat treatment is preferably in the range of 170 to 220 °C , particularly in the range of 180 to 200 °C , and the time is preferably in the range of 0.2 to 20 seconds.

The film according to the present invention preferably has the following surface properties.

With respect to protrusions on the surface of the film according to the present invention, the height distribution and number thereof are preferably specified as follows to improve the uniformity of the surface, the running ability and the electromagnetic conversion property.

With the distribution of height of protrusions, the height of protrusions is determined on protrusions having a height of not less than 20nm, and if the relative standard deviation thereof is not more than 1.0, the

uniformity of the protrusion height and the abrasion resistance can be improved.

With the number of protrusions, if it is not less than 5000/$mm^2$ , a stable running ability and a good abrasion resistance can be obtained.

Although the shape of the protrusions is not particularly restricted in the film according to the present invention, a shape, wherein the length in the longitudinal direction of the film is larger than the length in the transverse direction of the film, that is, the radius of the curvature of the tip portion of protrusion in the longitudinal direction of the film ($\beta 1$) is formed larger than the radius of the curvature of the tip portion of protrusion in the transverse direction of the film ($\beta 2$) and the ratio ($\beta 1/\beta 2$) of the radii is controlled in the range of 1.1 to 3.0, is preferred. The control of the ratio ($\beta 1/\beta 2$) can be performed by controlling various conditions when the film is biaxially oriented, particularly the rate of draw ratios in the longitudinal and transverse directions.

The impact strength in the running direction of the film can be increased by controlling the shape of the protrusions in the form longer in the longitudinal direction of the film, and thereby the falling of the particles hardly occurs. If the ($\beta 1/\beta 2$) is more than 3.0, the protrusions become too long, the contact area with a guide roller or a guide pin becomes large and the friction therewith becomes large, and thereby the running ability is likely to deteriorate. Moreover, if a transfer occurs in the use of a magnetic tape etc., the electromagnetic conversion property deteriorates because of occurrence of a large wave on the magnetic surface, and it is not desired. On the contrary, if the ($\beta 1/\beta 2$) is not more than 1, the above advantage for increasing the strength in the film running direction cannot be obtained, and thereby the abrasion resistance is poor.

Although these surface properties of the film according to the present invention are effective for both a single layer film and a laminated film, the laminated film is more preferable from the viewpoint of running ability and electromagnetic property as aforementioned.

## Examples

The present invention will be hereunder explained in more detail by examples. The obtained polyester composition and the properties of the film are determined by the following methods.

A. Properties of particles:

(1) Diameter of particle:

Photographs of the particles in the polymer or the film are taken (size of the photograph: 8 cm x 10 cm, number of the photographs: 30) observing by an electron microscope at a magnification of 20,000 to 50,000, the equivalent sphere diameter of the organic polymeric particles is determined, and the weight average diameter (Dw), the number average diameter (Dn) and the distribution of the particle diameter by number standard are determined. Where, the equivalent sphere diameter means a diameter of a sphere having the same volume as that of the particle.

The ratio of the diameter in the longitudinal direction to the diameter in the thickness direction of the organic polymeric particles is determined by taking photographs in the section of the longitudinal direction of the film in the same manner as that described above, determining the ratio from the diameter in the longitudinal direction and the diameter in the thickness direction, and defining the weight average value relative to the total organic polymeric particles as the particle diameter ratio.

(2) Strength of particle ($S_{10}$) and Structure (softness and hardness):

The deformation is measured using a small compression tester (MCTM-201; produced by Shimadzu Seisakusyo Corporation) by applying a load of 0 to 1 gf at a loading speed of 0.0145 gf/s. $S_{10}$ is calculated from a load P (kgf) resulted when the particle is deformed by 10% using the aforementioned equation (1) (this measurement is repeated by 10 times and the mean value of the 10 times measurements is defined as $S_{10}$).

At the same time, when a break point generates in the curve plotted by force and deformation as shown in FIG. 2, because the particle has a soft portion and a hard portion, the structure is determined "composite structure" and distinguished from a single structure.

(3) Specific surface area (S):

The specific surface area S ($m^2/g$) is determined by a usual B.E.T method.

(4) Thermal resistance of particle:

The curve of loss in weight of a thermobalance is determined in a nitrogen gas atmosphere at a temperature elevating speed of 20 °C/min. using TAS-100 produced by Rigaku Denki Corporation. The temperature at 10% loss in weight is defined as the thermal decomposition temperature.

B. Properties of polymer:

(1) Intrinsic viscosity:

The intrinsic viscosity is determined at 25 °C using o-chlorophenol as the solvent.

(2) Casting property with electrostatic charge:

D.C. voltage of 6 kV is applied on the film melt extruded using an electrode provided between a die and a casting drum, and when the speed of the casting is gradually increased, a casting speed (m/min.) causing an application irregularity is determined. Accordingly, the faster is this speed, the better is the productivity, and it is preferable.

C. Properties of film:

(1) Parameter of surface roughness Ra, Rt:

The parameter of surface roughness is measured using a high-accuracy level difference measuring apparatus for thin film (ET-10 produced by Kosaka Kenkyusyo Corporation). Ra is center line average height, and Rt is maximum height and is represented by the distance between the highest and deepest peaks in the roughness curve. The measuring conditions are as follows, and the mean value of 20 measurements is defined as the parameter of surface roughness.

. Radius of the tip of probe : 0.5 μm
. Load of the probe : 5mg
. Measuring length : 1mm
. Cut off : 0.08mm

The detail of the respective parameters is shown in, for example, "Method for determining and estimating surface roughness" by Jiro Nara (Sogo Gijutsu Center, 1983).

(2) Average height, Number and Relative standard deviation of height distribution of protrusions on film surface:

The height data of the protrusions measured with a two beam and two detector type scanning electron microscope (ESM-3200; produced by Elionics Corporation) and a cross section measuring apparatus (PMS-1; produced by Elionics Corporation) by scanning the surface of the film setting the planar portion of the surface as the base (height 0) is transferred to an image processor (IBAS-2000; produced by Karlzuis Corporation), and an image of the protrusions on the film surface is reconstructed on the display of the image processor. Then, the circle equivalent diameter is determined from the area data of the individual particle obtained by processing the portion of the protrusion in a binary condition in the reconstructed image, this circle equivalent diameter is defined as the average diameter of the particle. Further, the highest value among each height of the protrusion portions processed in a binary condition is defined as the height of the protrusion, and this determination is repeated on the respective protrusions. The determination is repeated 500 times changing measuring portions, the average value of the heights of protrusions measured is defined as the average height of protrusions. Further, the standard deviation of the height distribution is determined from the height data of the respective protrusions. The value obtained by dividing the determined standard deviation by the above average height is defined as the relative standard deviation. The magnification of the scanning electron microscope (SEM) is 1000 to 8000 times. In some cases, the above data obtained by the SEM may be substituted by the data obtained by using a high precision light

interference type three dimensional surface analyzer (TOPO-3D produced by WYKO Corporation; objective lens: 40-200 magnifications, effective to use a high level image dissector type camera).

(3) Radius of curvature of tip portion of protrusion ($\beta$1,$\beta$2):

The height data of the protrusions measured with a two beam and two detector type scanning electron microscope (ESM-3200; produced by Elionics Corporation) and a cross section measuring apparatus (PMS-1; produced by Elionics Corporation) by scanning the surface of the film setting the planar portion of the surface as the base (height 0) is transferred to an image processor (IBAS-2000; produced by Karlzuis Corporation), and an image of the protrusions on the film surface is reconstructed on the display of the image processor. Then, the portion of the protrusion is processed into a binary condition in the reconstructed image, and the highest value among each height of the protrusion portions processed is defined as the height of the protrusion. Among the respective protrusions measured, the radius of the curvature of the tip portion of the protrusion is determined with respect to protrusions having a height of not less than 20nm by the following definition.

In the section curve of the protrusion (y = f(x)) passing through the peak of the protrusion on the image processor, the data of the protrusion heights in nine image elements which exist over both sides of the peak of the protrusion under a condition where the center element of the nine elements is at the peak of the protrusion are interpolated into the following function (3) by using least square, and the radius of the curvature $\beta$1i in the longitudinal direction of the film and the radius of the curvature $\beta$2i in the transverse direction of the film perpendicular to $\beta$1i are calculated by the following equation. Thus, the radius of the curvature $\beta$1i in the longitudinal direction of the film and the radius of the curvature $\beta$2i in the transverse direction of the film of the respective protrusions are determined on 20 fields, and the average ratio of the radius of the curvature in the longitudinal direction to the radius of the curvature in the transverse direction is determined by the following equation (5).

$$y = ax^2 + bx + c \quad (3)$$

$$\beta1, \beta2 = 1/|2a| \quad (4)$$

$$\beta1/\beta2 = \Sigma(\beta1i/\beta2i)/n \quad (5)$$

i: 1 to n
n: number of measured protrusions

Although the magnification of the scanning electron microscope is usually about 3000 times, an optimum magnification can be selected depending the size of the protrusions.

(4) Thickness of lamination:

In a case where the particles contained in the film at the highest density is organic polymeric particles, the thickness of the laminated layer is determined by measuring the depth profile of the particle density by XPS (X-ray photoelectron spectrum), IR (infrared spectroscopic analysis) or a confocal microscope while etching from the surface. In the surface layer of the film wherein a layer is laminated on one surface of the film, the particle density is low because of the boundary of the surface, and the particle density increases as distanced from the surface.

In the film wherein a layer is laminated on one surface of the film according to the present invention, the particle density becomes the maximum at a depth [I] and thereafter decreases again. Based on this particle density curve, a depth [II], at which the particle density becomes half of the maximum value, is defined as the thickness of the laminated layer (where, II>I). Further, with respect to other laminated films, the thickness is determined by analyzing in a similar manner from a portion beginning to indicating a particle density. In the case where inorganic particles are contained, the ratio of the density of the element originating from the particles contained at the highest density in the film to the density of the carbon in the polyester ($M^+/C^+$) determined by using secondary ion mass spectrum (SIMS) is defined as the particle density, and the analysis is carried out in the depth (thickness) direction from the surface of polyester A layer. The thickness of the lamination is determined in a manner similar to that described above. Further, the thickness also can be determined by observing the cross section of the film or using a level difference measuring

apparatus for thin film.

(5) Running ability:

The film is slitted to prepare a tape with a width of 1/2 inch. The tape is set in a tape running tester (TBT-300; produced by Yokohama System Kenkyusyo Corporation) and is run under a condition of 20°C and 60%RH, and the initial friction coefficient μk is determined by the following equation. Where, the diameter of a guide is 6 mmϕ , the material of the guide is SUS27 (surface roughness: 0.2S), the winding angle is 180 degrees and the running speed is 3.3 cm/sec.

$$\mu k = 0.733 \times \log (T_1/T_2)$$

$T_1$ : entrance side tension
$T_2$ : exit side tension

The film having the μk of not more than 0.35 is good in slipping property. If the μk is greater than 0.35, the slipping property when the film is processed or a product is made from the film extremely deteriorates.

(6) Abrasion resistance:

· Test ① (Abrasion resistance ① ):

The tape made by slitting the film at a width of 1/2 inch is brought into contact with a guide roll of stainless steel SUS-304 at a winding angle of 60 degrees, a running speed of 250 m/min., and a tension of 90g over a length of 100m, and the abrasion resistance ① is ranked by the amount of white powder generating on the surface of the guide roll as follows. Ranks A and B are determined acceptable.

Rank A: There is no generation of white powder.
Rank B: There is a small amount of white powder.
Rank C: There is a slightly large amount of white powder.
Rank D: There is a large amount of white powder.

· Test ② (Abrasion resistance ② ):

The tape applied with a magnetic layer is calendering treated at a temperature of 70 °C and a line pressure of 200 kg/cm by a small-sized test calendering apparatus (five stage type of steel rolls and nylon rolls, the nylon rolls come into contact with the base film surface). After the treatment is carried out over a length of 12000m, the white powder generated by the treatment and adhered to the nylon rolls is observed, the abrasion resistance ② is ranked as follows and ranks A and B are determined acceptable.

Rank A: There is no generation of white powder.
Rank B: There is a small amount of white powder.
Rank C: There is a slightly large amount of white powder.
Rank D: There is a large amount of white powder.

(7) Electromagnetic conversion property:

A magnetic coating solution with the following composition is coated on the film by using a gravure roll and the coated magnetic layer is magnetically oriented and dried. After the coated film is calendered by a small-sized test calendering apparatus (steel roll/nylon roll; 5 stages) at a temperature of 70 °C and a line pressure of 200 kg/cm, the film is cured at a temperature of 70 °C for 48 hours. The film is slitted to a tape with a width of 1/2 inch and a pancake is made from the tape. The tape is incorporated into a VTR cassette from the pancake by a length of 250m to make a VTR cassette tape. (Composition of magnetic coating solution) (All parts are by weight.)

| | |
|---|---|
| · Co-containing iron oxide | 100 parts |
| · Vinyl chloride/vinyl acetate copolymer | 10 parts |
| · Polyurethane elastomer | 10 parts |
| · Polyisocyanate | 5 parts |
| · Lecitin | 1 part |
| · Methylethylketone | 75 parts |
| · Methylisobutylketone | 75 parts |
| · Toluene | 75 parts |
| · Carbon black | 2 parts |
| · Lauric acid | 1.5 parts |

100% chromatic signal generated by a television testing wave generator is recorded in the above tape using a domestic VTR, and chromatic S/N is determined from the regenerated signal using a color video noise measuring apparatus.

Example 1 (Table 1):

Non-dried polyethylene terephthalate chips with an intrinsic viscosity of 0.670 and containing water component by 0. 3 wt% were molten by a vent-type twin screw extruder. Styrene-ethylvinylbenzene-butylacrylate-divinylbenzene copolymer particles (weight ratio; 10/20/40/30, after the surface was modified by methacrylic acid of 0.5 wt% relative to the particles, -COONa was formed by NaOH, and an anion interfacial active agent is used), which was dispersed as a water slurry with a concentration of 20 wt%, the weight average diameter Dw of which was 0.5 µm, Dw/Dn of which was 1.40, which had maximal values at positions of 0.05 µm and 0.5 µm whose ratio of the numbers was 1/3, $S_{10}$ of which was 4.5 kgf/mm$^2$ (a single structure), the specific surface area of which was 15.0 m$^2$/g and the thermal decomposition temperature of which was 390 °C , were added so that the content thereof was 1 wt% in the polyester. The vent port was maintained at a vacuum degree of 10 Torr, the resin was melt extruded at a temperature of 280 °C to obtain a polyethylene terephthalate containing organic polymeric particles (I). The intrinsic viscosity of the polymer obtained was 0.650.

On the other hand, polyethylene terephthalate (II) with an intrinsic viscosity of 0.650 was prepared by a regular method using dimethyl terephthalate of 100 parts by weight, ethylene glycol of 70 parts by weight, magnesium acetate of 0.06 part by weight as a catalyst for transesterification, antimony trioxide of 0.03 part by weight as a catalyst for polymerization and trimethylphosphate of 0.03 part by weight as a thermal stabilizer.

Then, the polymer (I) of 30 parts by weight and the polymer (II) of 70 parts by weight were blended (melt resistivity: 1 x $10^8$ Ω • cm), supplied to a vent-type twin screw extruder 1, and molten at a temperature of 280 °C . Further, another extruder 2 was prepared, pellets which do not contain particles were dried under a condition of a reduced pressure (3 Torr) at a temperature of 180 °C for three hours, the dried pellets were supplied to the extruder and molten at a temperature of 290 °C (polymer II). After these two polymers were filtered at a high accuracy, respectively, the polymers were laminated at a three layer lamination structure by a three layer feed block with a rectangular lamination portion such that the polymer (II) was placed as the base layer and the polymer (I) was placed at each surface of the base layer. After the laminated polymers were delivered out from a fish tail type die in the form of a sheet, and the sheet was wound, cooled and solidified on a casting drum with a surface temperature of 30 °C applying an electrostatic charging method to make a non-stretched film having a thickness of about 160 µm. The casting speed was 30 m/min. The draft ratio was 6.5.

The non-stretched film was stretched in the longitudinal direction at three stretching stages wherein the first stage was at 123 °C and 1.2 times, the second stage was at 126 °C and 1.45 times and the third stage was at 114 °C and 2.3 times. The uniaxially stretched film was stretched in the transverse direction at 111 °C and 3.5 times using a stenter, and then the film was heat treated under a condition of a constant length at 200 °C for five seconds to make a film having a thickness of 13 µm (lamination thickness: 1 µm). The content of the organic polymeric particles of the obtained film was 0.3 wt%, the particle diameter ratio thereof was 1.5, Ra was 0.016, Rt was 0.280, the relative standard deviation of the height distribution of the formed protrusions was 0.58, the number of the protrusions was 20000/mm$^2$, and $\beta 1/\beta 2$ was 1.25.

With the properties of the film, the $\mu k$ was 0.31, abrasion resistances ① and ② were both Rank A, the electromagnetic conversion property was +2.0 dB by the determination of chromatic S/N, and thus all properties were good.

Examples 2 to 10 (Table 1, Table 2):

Polyester compositions and laminated films were obtained by changing the composition, hardness, structure, particle size distribution and content of the organic polymeric particles. As shown in the Tables, the films according to the present invention were all in satisfactory level in running ability, abrasion resistance and electromagnetic conversion property.

However, the films of Examples 3, 5 to 9 were slightly reduced in the following points.

The $S_{10}$ was large in Example 3, the number of protrusions was small in Example 5, and in Example 6, the $S_{10}$ was large, and $\beta 1/\beta 2$ was small because of changing of film formation conditions and thereby the abrasion resistance and the electromagnetic conversion property deteriorated. In Example 7, the specific surface area was large, the relative standard deviation of the protrusions was large, and thereby the properties deteriorated. The properties deteriorated in Example 8 because of Rt/Ra and in Example 9 because of Dw/Dn, respectively. In Example 10, since styrene/2-ethylhexylacrylate/ethylene glycol dimethacrylate (20/50/30) particles [core: styrene/2-ethylhexylacrylate/ethylene glycol dimethacrylate (weight ratio: 20/10/60), shell: styrene/2-ethylhexylacrylate/ethylene glycol dimethacrylate (weight ratio: 20/70/15), core/shell: 1/2 by weight ratio (composite structure)] were employed, the running ability was good.

Example 11 (Table 2):

Zirconium oxide particles were used as inorganic particles, the ethylene glycol slurry thereof was added after transesterification, and a polyethylene terephthalate composition was obtained by a regular method. Further, the composition was mixed with the polyethylene terephthalate containing organic polymeric particles in a manner similar to that of Example 1 to obtain a laminated film. Particularly, the abrasion resistance, running ability and electromagnetic conversion property were improved.

Example 12 (Table 2):

After dimethyl terephthalate of 100 parts by weight and ethylene glycol of 64 parts by weight were transesterified using calcium acetate of 0.1 part by weight as a catalyst, lithium acetate of 0.2 part by weight and antimony trioxide of 0.04 part by weight were added, and trimethylphosphate of 0.15 part by weight and phosphite of 0.02 part by weight were further added to obtain a polymer. Then, the polymer was mixed with the polyethylene terephthalate containing organic polymeric particles in a manner similar to that of Example 1 to obtain a laminated film. Particularly, the abrasion resistance and running ability were improved.

Example 13 (Table 3):

Polyethylene terephthalate was changed to polyethylene naphthalate, and a laminated film shown in the table was obtained in a manner similar to that of Example 1. Particularly, the abrasion resistance, running ability and electromagnetic conversion property were improved.

Example 14 (Table 3):

Ethylene glycol slurry of organic polymeric particles was added after transesterification to obtain polyethylene terephthalate containing the organic polymeric particles. Other conditions were the same as those of Example 1 to make a laminated film. The properties of the laminated film obtained slightly deteriorated in abrasion resistance and electromagnetic conversion property.

Example 15 (Table 3):

When the polymer (I) containing the particles shown in the Table was formed as a single layer film, the film indicated the properties shown in the Table. The Rt/Ra became large a little, and the electromagnetic conversion property slightly deteriorated.

Comparative Example 1 (Table 3):

When a laminated film was obtained in a manner similar to that of Example 1 using silicon oxide particles having a average diameter of 0.5 μm, the abrasion resistance deteriorated and a film having a satisfactory property cannot be obtained.

Comparative Example 2 (Table 3):

When a laminated film was obtained in a manner similar to that of Example 14 using crosslinked polymeric particles prepared by milling a crosslinked polymer and adding the particles in a form of ethylene glycol slurry, the specific surface area was large and a film having a satisfactory property cannot be obtained.

Comparative Example 3 (Table 3):

When a single layer film was obtained in a manner similar to that of Comparative Example 2 modifying the surfaces of the particles of Comparative Example 2, particularly the Rt/Ra deteriorated and a film having a satisfactory property cannot be obtained.

Comparative Example 4 (Table 4):

Since organic polymeric particles with a large $S_{10}$ was used to obtain a laminated film, satisfactory properties cannot be obtained.

Comparative Example 5 (Table 4):

When a laminated film was obtained using only non-incorporated particles without using the organic polymeric particles of Example 12, satisfactory properties cannot be obtained.

The abbreviated symbols shown in the Tables represent the following compounds.

| | |
|---|---|
| ST : | styrene |
| EVB : | ethylvinylbenzene |
| BA : | butylacrylate |
| 2-EHA : | 2-ethylhexylacrylate |
| MMA : | methylmethacrylate |
| OA : | octylacrylate |
| EDMA : | ethylene glycol dimethacrylate |
| DVB : | divinylbenzene |

Table 1

| | Example 1 | Example 2 | Example 3 | Example 4 | Example 5 | Example 6 |
|---|---|---|---|---|---|---|
| Kind of particles | ST/EVB/BA/DVB | ST/EVB/BA/DVB | ST/EVB/DVB | ST/2-EHA/EDMA | BA/DVB | MMA/DVB |
| Weight ratio of composition | 10/20/40/30 | 10/5/60/25 | 8/40/52 | 20/50/30 | 60/40 | 55/45 |
| $S_{10}$ (kgf/mm²) | 4.5 | 3.8 | 7.3 | 3.5 | 5.9 | 8.2 |
| Weight average diameter Dw (μm) | 0.5 | 0.5 | 0.6 | 0.7 | 0.6 | 1.0 |
| Specific surface area S (m²/g) | 15.0 | 16.0 | 12.7 | 13.0 | 15.5 | 10.5 |
| S × Dw | 7.5 | 8.0 | 7.6 | 9.1 | 9.3 | 10.5 |
| Thermal decomposition temperature (℃) | 390 | 390 | 405 | 385 | 395 | 410 |
| Dw/Dn | 1.40 | 1.30 | 1.35 | 1.90 | 1.53 | 1.25 |
| Content (wt%) | 0.3 | 3.0 | 0.3 | 0.4 | 0.12 | 0.7 |
| Particle diameter ratio | 1.5 | 1.8 | 1.2 | 2.0 | 1.4 | 1.1 |
| Intrinsic viscosity | 0.650 | 0.645 | 0.643 | 0.640 | 0.648 | 0.649 |
| Ra (μm) | 0.016 | 0.017 | 0.019 | 0.016 | 0.018 | 0.020 |
| Rt (μm) | 0.280 | 0.198 | 0.320 | 0.290 | 0.308 | 0.273 |
| Rt/Ra | 17.5 | 11.6 | 16.8 | 18.1 | 17.1 | 13.7 |
| Relative standard deviation | 0.58 | 0.51 | 0.54 | 0.63 | 0.59 | 0.51 |
| Number of protrusions (number/mm²) | 20,000 | 195,000 | 11,500 | 10,200 | 4,500 | 5,800 |
| $\beta 1/\beta 2$ | 1.25 | 1.30 | 1.13 | 1.75 | 1.20 | 1.00 |
| $\mu k$ | 0.31 | 0.26 | 0.29 | 0.30 | 0.32 | 0.31 |
| Abrasion resistance ① | A | A | B | A | B | B |
| Abrasion resistance ② | A | A | A | A | A | B |
| Electromagnetic conversion property (dB) | + 2.0 | + 2.4 | + 1.0 | + 2.2 | + 0.5 | + 0.6 |

Table 2

| | Example 7 | Example 8 | Example 9 | Example 10 | Example 11 | Example 12 |
|---|---|---|---|---|---|---|
| Kind of particles | ST/2-EHA/EDMA | BA/MMA/EDMA | OA/EVB/DVB | ST/BA/EDMA | BA/DVB+ zirconium oxide | ST/OA/DVB+non-incorporated particle |
| Weight ratio of composition | 20/45/35 | 40/40/20 | 35/30/35 | 20/50/30 | 65/35 | 15/60/25 |
| $S_{10}$ ($kgf/mm^2$) | 4.2 | 5.7 | 4.8 | 4.3 | 5.5 | 3.6 |
| Weight average diameter Dw ($\mu m$) | 1.2 | 0.5 | 0.6 | 0.7 | 0.6 + 0.03 | 0.5 |
| Specific surface area S ($m^2/g$) | 17.0 | 21.0 | 12.3 | 14.2 | 18.2 | 17.3 |
| S × Dw | 20.4 | 10.5 | 7.4 | 9.9 | 10.9 | 8.7 |
| Thermal decomposition temperature (℃) | 385 | 395 | 380 | 385 | 390 | 380 |
| Dw/Dn | 2.40 | 2.05 | 1.06 | 1.48 | 1.30 | 1.68 |
| Content (wt%) | 1.0 | 0.3 | 0.3 | 0.4 | 0.20+ 0.20 | 0.20 |
| Particle diameter ratio | 1.8 | 1.5 | 1.5 | 1.9 | 1.5 | 1.8 |
| Intrinsic viscosity | 0.639 | 0.640 | 0.642 | 0.641 | 0.647 | 0.640 |
| Ra ($\mu m$) | 0.019 | 0.012 | 0.016 | 0.016 | 0.017 | 0.018 |
| Rt ($\mu m$) | 0.312 | 0.378 | 0.310 | 0.260 | 0.225 | 0.298 |
| Rt/Ra | 16.4 | 31.5 | 19.4 | 16.3 | 13.2 | 16.6 |
| Relative standard deviation | 1.6 | 0.71 | 0.57 | 0.61 | 0.51 | 0.59 |
| Number of protrusions ($number/mm^2$) | 5,300 | 19,000 | 11,600 | 10,700 | 9,000 | 17,000 |
| $\beta 1/\beta 2$ | 1.52 | 1.40 | 1.30 | 1.20 | 1.24 | 1.27 |
| $\mu k$ | 0.28 | 0.32 | 0.29 | 0.27 | 0.30 | 0.27 |
| Abrasion resistance ① | B | B | B | A | A | A |
| Abrasion resistance ② | B | A | A | A | A | A |
| Electromagnetic conversion property (dB) | + 0.1 | + 0.2 | + 0.6 | + 2.4 | + 2.8 | + 1.8 |

Table 3

| | Example 13 | Example 14 | Example 15 | Comparative Example 1 | Comparative Example 2 | Comparative Example 3 |
|---|---|---|---|---|---|---|
| Kind of particles | ST/EVB/BA/DVB | ST/EDMA | OA/DVB | Silicon oxide | BA/EDMA | BA/EDMA |
| Weight ratio of composition | 15/20/45/20 | 70/30 | 65/35 | — | 60/40 | 60/40 |
| $S_{10}$ (kgf/mm²) | 4.0 | 5.1 | 4.4 | 18.0 | 6.3 | 6.3 |
| Weight average diameter Dw (μm) | 0.6 | 1.0 | 0.5 | 0.5 | 1.0 | 1.0 |
| Specific surface area S (m²/g) | 14.9 | 10.3 | 11.3 | 14.0 | 62.0 | 62.0 |
| S × Dw | 8.9 | 10.3 | 5.7 | 7.0 | 62.0 | 62.0 |
| Thermal decomposition temperature (℃) | 390 | 390 | 385 | — | 395 | 395 |
| Dw/Dn | 1.31 | 1.27 | 1.71 | 1.20 | 1.47 | 1.47 |
| Content (wt%) | 0.3 | 1.0 | 0.3 | 0.3 | 0.2 | 0.2 |
| Particle diameter ratio | 1.7 | 1.6 | 1.6 | 1.0 | 1.9 | 1.7 |
| Intrinsic viscosity | 0.647 | 0.649 | 0.650 | 0.651 | 0.639 | 0.648 |
| Ra (μm) | 0.017 | 0.018 | 0.020 | 0.019 | 0.020 | 0.021 |
| Rt (μm) | 0.291 | 0.409 | 0.372 | 0.345 | 0.687 | 0.868 |
| Rt/Ra | 17.1 | 22.7 | 18.6 | 18.2 | 34.4 | 41.3 |
| Relative standard deviation | 0.51 | 0.93 | 0.73 | 0.49 | 0.89 | 0.98 |
| Number of protrusions (number/mm²) | 12,000 | 8,300 | 22,000 | 9,200 | 14,300 | 15,100 |
| $\beta 1/\beta 2$ | 1.32 | 1.24 | 1.24 | 1.00 | 0.98 | 0.97 |
| μk | 0.27 | 0.26 | 0.32 | 0.26 | 0.26 | 0.29 |
| Abrasion resistance ① | A | B | A | C | C | D |
| Abrasion resistance ② | A | B | A | D | C | C |
| Electromagnetic conversion property (dB) | + 2.6 | + 0.3 | + 1.0 | + 0.0 | − 0.5 | − 0.8 |

Table 4

| | Comparative Example 4 | Comparative Example 5 |
|---|---|---|
| Kind of particles | MMA/EDMA | non-incorporated particle |
| Weight ratio of composition | 10/90 | — |
| $S_{10}$ (kgf/mm²) | 10.8 | — |
| Weight average diameter Dw (μm) | 1.5 | — |
| Specific surface area S (m²/g) | 7.1 | — |
| S × Dw | 10.7 | — |
| Thermal decomposition temperature (°C) | 410 | — |
| Dw/Dn | 1.20 | — |
| Content (wt%) | 3.0 | — |
| Particle diameter ratio | 1.0 | — |
| Intrinsic viscosity | 0.643 | 0.647 |
| Ra (μm) | 0.020 | 0.023 |
| Rt (μm) | 0.299 | 0.458 |
| Rt/Ra | 15.0 | 19.9 |
| Relative standard deviation | 0.50 | 1.10 |
| Number of protrusions (number/mm²) | 10,000 | 6,000 |
| $\beta 1/\beta 2$ | 1.01 | 0.98 |
| $\mu k$ | 0.26 | 0.24 |
| Abrasion resistance ① | C | C |
| Abrasion resistance ② | C | B |
| Electromagnetic conversion property (dB) | + 0.2 | − 0.4 |

Industrial Applications of the Invention

The polyester film according to the present invention can be balance in running ability, abrasion resistance and electromagnetic conversion property in use of a magnetic recording media by the above-described constitution. Therefore, the polyester film according to the present invention can be applied to various industrial fields requiring these properties, and particularly it is useful as a base film of a magnetic recording media.

**Claims**

**1.** A polyester film characterized in that said polyester film contains organic polymeric particles whose strength when deformed by 10% ($S_{10}$) is more than 0 kgf/mm$^2$ and not more than 10 kgf/mm$^2$ and whose product of specific surface area S (m$^2$/g) and weight average diameter Dw (μm) is not less than 5 and not more than 60, the ratio of the diameter in the longitudinal direction of the film to the diameter in the thickness direction of the film of each of the particles contained in the film is not less than 1.1, and the parameter of the surface roughness of the film Rt/Ra is not more than 40.

2. The polyester film according to claim 1, wherein the ratio of the weight average diameter (Dw) to the number average diameter (Dn) of said organic polymeric particles is not less than 1.1.

3. The polyester film according to claim 1 or 2, wherein said organic polymeric particles are crosslinked polymeric particles and the content of the crosslinkage component of the particles is in the range of 2 to 50 wt%.

4. The polyester film according to claim 3, wherein the non-crosslinked component in said crosslinked polymeric particles is composed of at least one kind of monomer whose glass transition temperature when transformed to a polymer is not more than 50 °C.

5. The polyester film according to claim 3, wherein said crosslinked polymeric particles contains an acrylate containing an alkyl group having a carbon number of not less than 4 and/or a methacrylate containing an alkyl group having a carbon number of not less than 4 at a content of not less than 10 wt% as a non-crosslinked component.

6. The polyester film according to any of claims 1 to 5, wherein said polyester film contains at least one kind of inorganic particles whose average diameter is in the range of 0. 001 to 5 $\mu$m.

7. The polyester film according to claim 6, wherein said inorganic particles are selected from the group consisting of silicon oxide, calcium carbonate, aluminium oxide, zirconium oxide and titanium oxide particles.

8. The polyester film according to any of claims 1 to 7, wherein said polyester film contains precipitated particles a part of the constituent of which is composed of phosphorus and at least one of lithium and calcium.

9. The polyester film according to any of claims 1 to 8, wherein said polyester film is biaxially oriented.

10. The polyester film according to claim 9, wherein the relative standard deviation of the distribution of the protrusions formed on at least one surface of the film is not more than 1.0 and the number of the protrusions is not less than 5,000/$mm^2$.

11. The polyester film according to claim 10, wherein the ratio ($\beta 1/\beta 2$) of the radius of the curvature of the tip portion of protrusion in the longitudinal direction of the film ($\beta 1$) to the radius of the curvature of the tip portion of protrusion in the transverse direction of the film ($\beta 2$) of the protrusions formed on at least one surface of the film is in the range of 1.1 to 3.0.

12. The polyester film according to any of claims 1 to 11, wherein said polyester film is a laminated film, and the laminated film has at least one film layer containing said organic polymeric particles.

13. The polyester film according to claim 12, wherein said film layer containing said organic polymeric particles is laminated as an outermost layer of at least one surface side of said laminated film.

14. The polyester film according to claim 13, wherein said film layer containing said organic polymeric particles is laminated as an outermost layer of each surface side of said laminated film.

15. The polyester film according to any of claims 1 to 14, wherein said polyester film or a film wherein a coating layer is provided on one surface or each surface of said polyester film is used as a base film for a magnetic recording media.

16. A process for producing a polyester film comprising the steps of:

adding organic polymeric particles whose strength when deformed by 10% ($S_{10}$) is more than 0 kgf/$mm^2$ and not more than 10 kgf/$mm^2$ to a polyester in a condition of a water slurry and/or an organic compound slurry having a boiling point of not higher than 200 °C ; and

forming said polyester in a form of a film by melt extruding said polyester and thereafter stretching the polyester so that the product of the specific surface area S ($m^2$/g) and the weight average diameter Dw ($\mu$m) of said particles contained in the film is not less than 5 and not more than 60 and the ratio of

the diameter in the longitudinal direction of the film to the diameter in the thickness direction of the film of each of the particles contained in the film is not less than 1.1.

FIG. 1

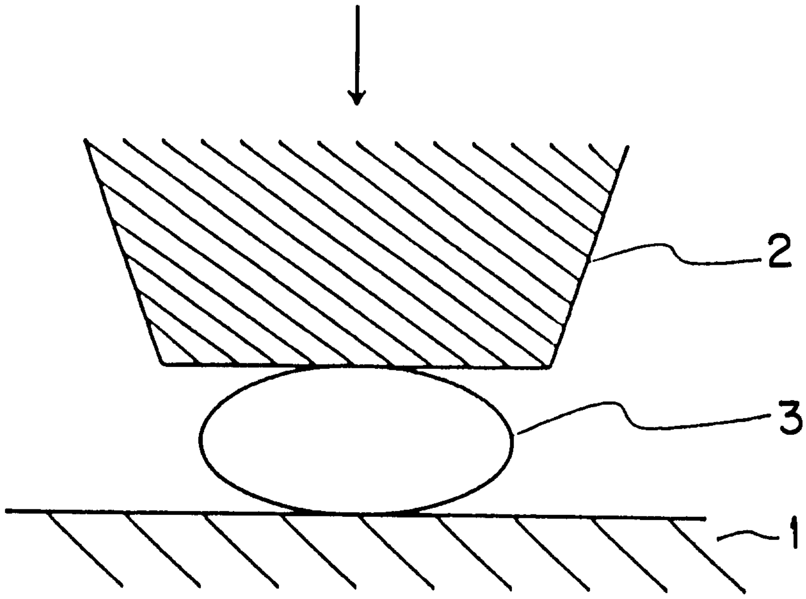


FIG. 2

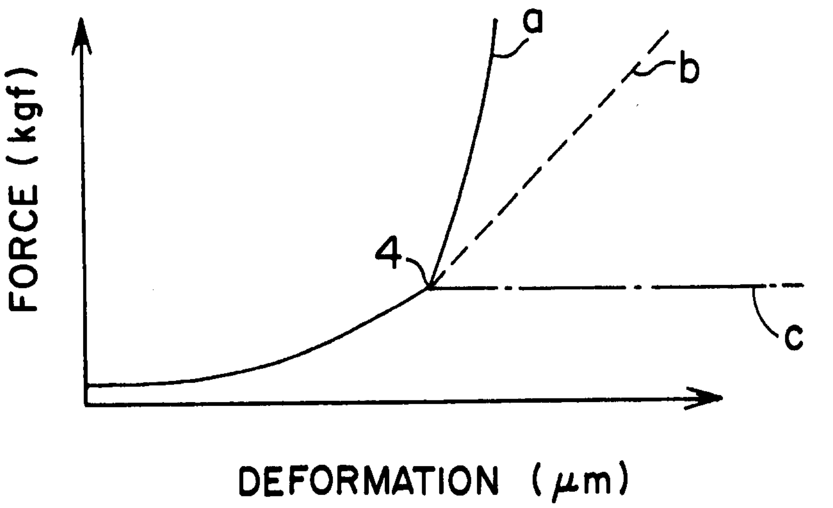

FIG. 3

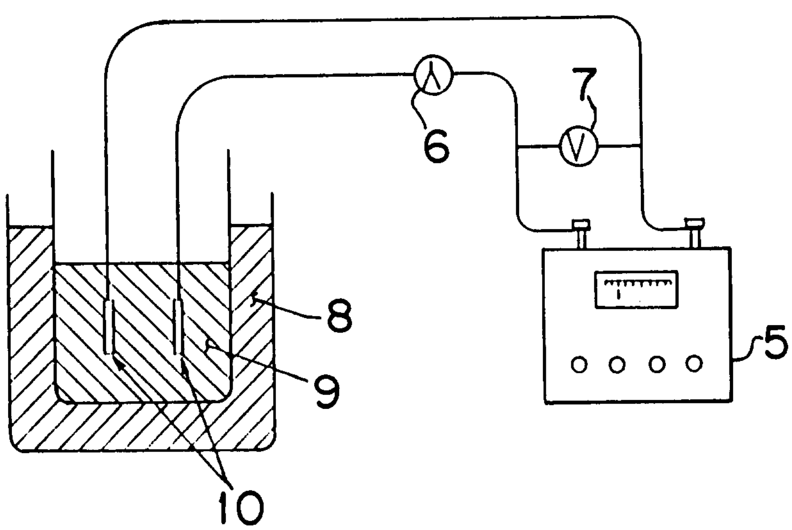

# INTERNATIONAL SEARCH REPORT

International Application No PCT/JP92/00426

**I. CLASSIFICATION OF SUBJECT MATTER** (if several classification symbols apply, indicate all) [6]

According to International Patent Classification (IPC) or to both National Classification and IPC

Int. Cl$^5$ C08J5/18, B32B27/18, B32B27/36, B29C55/02// C08L67:02, B29K67:00

**II. FIELDS SEARCHED**

Minimum Documentation Searched [7]

| Classification System | Classification Symbols |
|---|---|
| IPC | C08J5/18, B32B27/18, B32B27/36, B29C55/02 |

Documentation Searched other than Minimum Documentation to the Extent that such Documents are Included in the Fields Searched [8]

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| P | JP, A, 3-143929 (Diafoil Co., Ltd.), June 19, 1991 (19. 06. 91), (Family: none) | 1-16 |
| P | JP, A, 3-246033 (Diafoil Co., Ltd.), November 1, 1991 (01. 11. 91), (Family: none) | 1-16 |
| P | JP, A, 3-246814 (Diafoil Co., Ltd.), November 5, 1991 (05. 11. 91), (Family: none) | 1-16 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| June 12, 1992 (12. 06. 92) | June 30, 1992 (30. 06. 92) |
| **International Searching Authority** | **Signature of Authorized Officer** |
| Japanese Patent Office | |